(19) Europäisches Patentamt

European Patent Office

Office européen des brevets

(11) Numéro de publication : **0 454 592 A1**

## (12) DEMANDE DE BREVET EUROPEEN

(21) Numéro de dépôt : **91401124.2**

(22) Date de dépôt : **26.04.91**

(51) Int. Cl.⁵ : **F16D 1/08, F16D 3/00, F16D 3/205**

(30) Priorité : **27.04.90 FR 9005436**

(43) Date de publication de la demande :
**30.10.91 Bulletin 91/44**

(84) Etats contractants désignés :
**DE ES FR GB IT**

(71) Demandeur : **GLAENZER SPICER**
**10 Rue J.P. Timbaud**
**F-78301 Poissy (FR)**

(72) Inventeur : **Moulinet, François**
**39, rue des Temporets**
**F-78510 Triel sur Seine (FR)**

(74) Mandataire : **Kohn, Philippe et al**
**c/o CABINET LAVOIX 2, place d'Estienne d'Orves**
**F-75441 Paris Cédex 09 (FR)**

(54) **Joint de transmission, partie de ligne de transmission équipée d'un tel joint et procédé de mise en place d'un joint.**

㊌57    L'invention propose un joint de transmission (12) du type comportant un premier élément (26) relié à un premier arbre (14) et monté articulé dans un second élément (32) formant boîtier fixé à un organe de transmission (16), caractérisé en ce que le boîtier (32) comporte une bride radiale de fixation (36) montée coulissante axialement par rapport à l'enveloppe extérieure (34) du boîtier (32) et des moyens (64) d'immobilisation axiale de la bride de fixation (36) par rapport à l'enveloppe extérieure (34) du boîtier (32) lorsque le second élément (32) est en position fixe sur l'organe de transmission (16).
    Application à un joint de transmission de véhicule automobile.

EP 0 454 592 A1

Jouve, 18, rue Saint-Denis, 75001 PARIS

FIG.1

La présente invention concerne un joint de transmission du type comportant un premier élément relié à un premier arbre et monté articulé dans un second élément formant boîtier fixé à un organe de transmission.

Des joints de transmission de ce type sont utilisés notamment dans les transmissions de véhicule automobile. La conception des véhicules impose de nombreuses contraintes du fait de la présence d'organes gênants lors de la mise en place de la transmission sur le véhicule et présente également des dispersions dimensionnelles importantes dans la position relative des organes menants et menés reliés entre eux par la transmission.

Lorsque les joints de transmission sont conçus pour absorber les débattements relatifs de fonctionnement, entre les organes menants et menés. Cette faculté d'absorption inhérente à la conception du joint de transmission peut permettre d'absorber partiellement les dispersions dimensionnelles lors du montage.

On constate que cette faculté existait lorsque les groupes motopropulseurs des véhicules étaient placés en position longitudinale car les débattements de fonctionnement étaient faibles et la conception des joints était telle qu'ils pouvaient absorber aisément les dispersions dimensionnelles lors du montage sur le véhicule.

Avec la conception de plus en plus répandue de véhicules automobiles à groupes motopropulseurs placés en position transversale, les débattements relatifs des organes menants et menés sont devenus beaucoup plus importants et la conception des joints de transmission, en particulier pour les transmissions longitudinales, ne permet plus d'absorber les dispersions dimensionnelles lors du montage sur le véhicule.

Des tentatives de modification de la conception des joints de transmission du type coulissant en vue de résoudre ce double problème ont abouti à des solutions inadmissibles tant pour la partie mécanique de fonctionnement des joints que pour les soufflets d'étanchéité qui les équipent.

Il a donc également été proposé de prévoir des dispositifs annexes de mise à longueur de la transmission indépendants des joints eux-mêmes.

Ces dispositifs ont pour principal inconvénient d'être juxtaposés aux joints et d'augmenter ainsi exagérément l'encombrement axial de ces ensembles. On constate également des phénomènes de mise en porte-à-faux des joints de transmission qui pénalisent l'équilibrage dynamique des transmissions.

La présente invention a pour but de proposer un joint de transmission qui permet d'absorber des grandes dispersions de montage des transmissions équipées d'un tel joint tout en conservant au joint des caractéristiques de fonctionnement, et notamment de débattement, qui soient optimales.

Dans ce but l'invention propose un joint de transmission du type mentionné ci-dessus, caractérisé en ce que le boîtier du second élément comporte une bride radiale de fixation montée coulissante axialement par rapport à l'enveloppe extérieure du boîtier et des moyens d'immobilisation axiale de la bride de fixation par rapport à l'enveloppe extérieure du boîtier lorsque le second élément est en position fixée sur l'organe de transmission.

Selon d'autres caractéristiques de l'invention :
- les moyens d'immobilisation axiale de la bride de fixation comportent des moyens de liaison par friction qui coopèrent avec la surface cylindrique externe de l'enveloppe extérieure du boîtier ;
- les moyens de liaison par friction comportent un élément expansible radialement disposé dans un logement cylindrique annulaire délimité radialement par la surface cylindrique externe de l'enveloppe extérieure et par une portion de surface cylindrique interne formée dans le corps de la bride de fixation ou dans une partie de l'organe de transmission ;
- les moyens de liaison par friction comportent une première et une seconde surfaces radiales de compression formées respectivement sur la bride de fixation et sur l'organe de transmission et qui compriment axialement l'élément expansible dans son logement lors du serrage de la bride de fixation sur l'organe de transmission ;
- la bride de fixation comporte un alésage axial borgne dont la surface cylindrique constitue la portion de surface cylindrique interne du logement et dont la paroi de fond constitue la première surface radiale de compression. L'organe de transmission comportant un prolongement axial de la bride de fixation et dont l'alésage axial de la bride de fixation et dont la surface radiale d'extrémité constitue la seconde surface radiale de compression ;
- la bride de fixation comporte un prolongement axial en forme de piston dont la surface radiale d'extrémité constitue la première surface radiale de compression et qui pénètre axialement à l'intérieur d'un alésage axial borgne formé dans l'organe de transmission, dont la paroi cylindrique constitue la portion de surface cylindrique interne du logement et dont la paroi de fond constitue la seconde surface radiale de compression ;
- l'élément expansible est un manchon en matériau élastique ;
- l'élément expansible est constitué par un empilement de rondelles élastiques ;
- le joint de transmission est un joint fixe ou un joint coulissant.

L'invention propose également une partie de ligne de transmission de véhicule automobile du type comportant un arbre de transmission équipé à chacune de ses extrémités d'un joint de transmission conforme aux enseignements de l'invention.

L'invention propose enfin un procédé pour la mise en place d'un joint de transmission conforme aux enseignements de l'invention, caractérisé en ce qu'il consiste à :

- a) immobiliser temporairement le boîtier par rapport au premier élément dans une position axiale prédéterminée ;
- b) laisser se positionner librement le boîtier par rapport à la bride de fixation ;
- c) immobiliser axialement la bride de fixation par rapport au boîtier ; et
- d) libérer le boîtier par rapport au premier élément.

Selon une autre caractéristique du procédé, l'immobilisation axiale temporaire du boîtier par rapport au premier élément est réalisée à l'aide d'un gabarit de réglage.

D'autres caractéristiques et avantages de l'invention apparaîtront à la lecture de la description détaillée qui va suivre pour la compréhension de laquelle on se reportera au dessin annexé dans lequel:

- la figure 1 est une demi-vue en coupe axiale dune partie de ligne de transmission de véhicule automobile comportant un joint de transmission conforme aux enseignements de l'invention ;
- la figure 2 est une vue de détail de la figure 1 qui illustre une première variante de réalisation des moyens de liaison par friction entre le boîtier et sa bride de fixation ; et
- la figure 3 est une vue similaire à celle de la figure 2 qui illustre une seconde variante de réalisation des moyens de liaison.

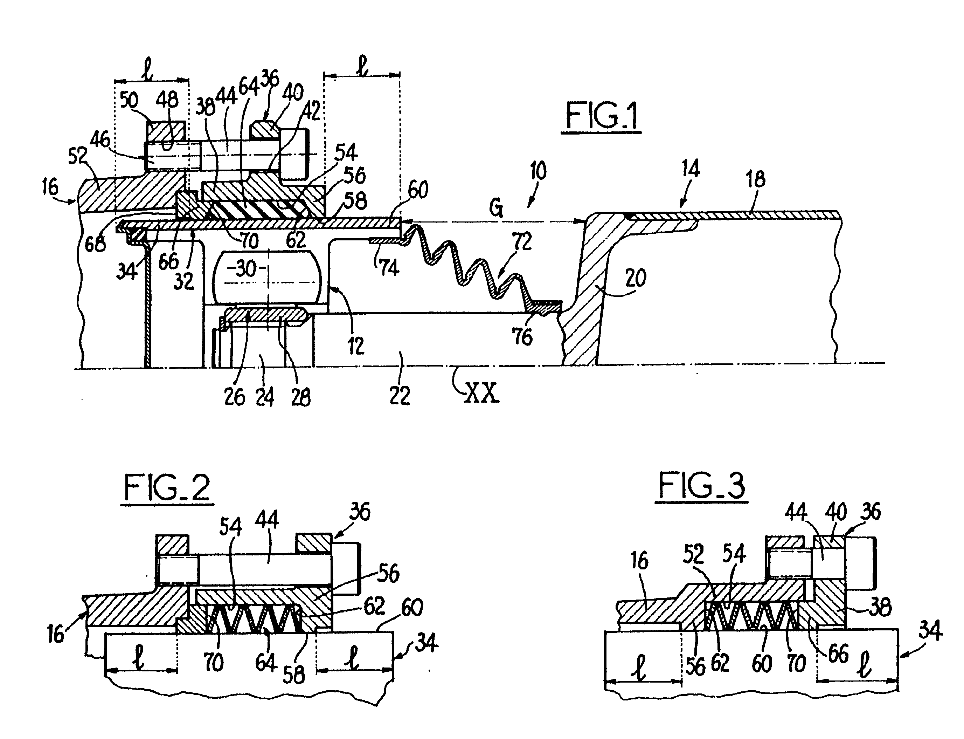

On reconnaît à la figure 1 une partie 10 d'une ligne de transmission de véhicule automobile d'axe général X-X.

La transmission comporte un joint de transmission 12 qui relie un premier arbre de transmission 14 à un organe de transmission 16 constitué par exemple par un organe de sortie d'une boîte de vitesses ou d'un différentiel.

L'arbre 14 est illustré sous la forme d'un tube 18 fermé à son extrémité par un embout soudé 20 qui se prolonge axialement par un arbre plein 22 dont l'extrémité cannelée 24 reçoit le premier élément 26 du joint de transmission 12 constitué par un tripode.

En effet, dans le mode de réalisation représenté à la figure 1, le joint de transmission 12 est un joint homocinétique coulissant du type à tripode à galets.

Le tripode 26 comporte un moyeu 28 immobilisé axialement sur l'extrémité cannelée 24 dont chacun des trois bras reçoit un galet 30.

Le second élément 32 du joint de transmission 12 est un boîtier ou barillet qui comporte des paires de chemins de roulement 36 dont chacune reçoit un galet 30.

Le boîtier 32 comporte une enveloppe extérieure cylindrique circulaire 34 dont la longueur axiale est nettement supérieure à celle des chemins de roulement 36.

A la figure 1, le tripode 26 est représenté dans sa position axiale médiane qu'il occupe par rapport au boîtier 32 par rapport auquel il peut se déplacer axialement de part et d'autre de cette position médiane pour absorber les débattements de fonctionnement de la transmission.

Le boîtier 32 est relié à l'organe de transmission 16 par une bride de fixation 36 comportant un corps 38 et une collerette radiale 40.

La collerette 40 comporte une série de perçages axiaux 42, répartis régulièrement autour de son axe, dont chacun reçoit un boulon de fixation 44 dont l'extrémité filetée 46 est reçue dans un taraudage correspondant 48 formé dans une collerette radiale en vis-à-vis 50 qui prolonge la partie tubulaire d'extrémité 52 de l'organe de transmission 16.

Le corps axial 38 de la bride 36 comporte un alésage interne borgne 54 délimité vers la droite par un fond radial 56 qui comporte lui-même un alésage 58 dans lequel est reçue de manière coulissante la surface externe 60 de l'enveloppe extérieure 34 du boîtier 32.

La surface externe 60, la surface intérieure cylindrique de l'alésage 54 et la surface intérieure 62 du fond 56 délimitent un logement annulaire cylindrique dans lequel est disposé un manchon en caoutchouc 64.

Le manchon 64 constitue un élément expansible radialement qui permet d'immobiliser axialement et en rotation la bride de fixation 36 par rapport au boîtier 32.

A cet effet l'élément 64 peut être comprimé axialement par un piston annulaire cylindrique 66 dont l'extrémité libre pénètre dans l'alésage 54 et dont la face radiale arrière 68 est fixée à la partie tubulaire 52 de l'organe de transmission 16.

Le manchon en caoutchouc 64 est donc susceptible d'être comprimé axialement entre deux surfaces de compression sensiblement radiales constituées d'une part par la surface 62 du fond 56 de l'alésage 64 et par la face avant d'extrémité libre 70 du piston annulaire 68.

C'est le déplacement relatif de la bride 36 par rapport à l'organe de transmission 16 qui provoque la compression axiale, et donc l'expansion radiale, plus ou moins importante du manchon 64 dans son logement.

En position non comprimée, c'est-à-dire dans la position initiale de livraison du sous-ensemble constitué par les deux éléments du joint de transmission avant la fixation par serrage de la bride 36 sur l'organe de transmission 16, l'enveloppe extérieure 34 du boîtier 32 est libre de coulisser axialement par rapport à la bride 36 de part et d'autre de la position moyenne représentée à la figure 1 d'une cote de réglage "1".

On comprend que le serrage de la bride de fixation 36 par les boulons 44 provoque simultanément l'expansion radiale du manchon 64 et donc l'immobilisation axiale de la bride par rapport au boîtier 32 du fait de la liaison par friction assurée par le manchon 64 entre la surface externe 60 de l'enveloppe extérieure 34 et la surface cylindrique interne de l'alésage 54 de la bride 36.

Le joint de transmission comporte également un soufflet d'étanchéité 72 dont une extrémité 74 est fixée sur la surface cylindrique interne du boîtier 32 et dont l'extrémité opposée 76 est montée sur l'arbre plein 22.

La mise en place et la mise à longueur de la partie de transmission 10 sur un véhicule automobile s'effectuent de la manière suivante.

Après avoir mis en place le sous-ensemble constitué par le premier arbre 14 et le joint de transmission 12 sur le véhicule automobile, l'opérateur immobilise axialement et temporairement le boîtier 32 par rapport au premier arbre 14 et donc par rapport au tripode 26, à l'aide d'un gabarit de réglage (non représenté) qui détermine une cote fixe G entre le boîtier 32 et l'arbre de transmission 14.

Cette cote est choisie de manière à ce que le tripode 26 occupe sa position médiane de fonctionnement par rapport au boîtier 32 telle que représentée à la figure 1.

L'opérateur déplace ensuite axialement la bride 36 et ses boulons 44 pour en réaliser la fixation sur l'organe de transmission 16 par vissage progressif des boulons 44 dans les trous taraudés 48.

Au début de cette opération, le manchon 64 n'est pas comprimé axialement et le boîtier 32 se positionne librement par rapport à la bride de fixation 36 pour permettre la "mise à longueur" de la partie de ligne de transmission 10 et d'absorber ainsi les tolérances dues aux dispersions dimensionnelles de fabrication du véhicule.

Lorsque l'opérateur poursuit le serrage des boulons 44, il provoque progressivement l'expansion radiale du manchon 64 et donc l'immobilisation axiale et en rotation de la bride de fixation 36 par rapport au boîtier 32 et donc l'immobilisation axiale du boîtier 32 par rapport à l'organe de transmission 16.

Dans le mode de réalisation représenté aux figures, l'élément expansible constitué par le manchon 64 assure simultanément la fonction d'immobilisation axiale et également d'élément de transmission du couple d'entraînement entre l'organe de transmission 16 et l'arbre 14. Toutefois l'invention n'est pas limitée à cette conception, la transmission du couple pouvant par exemple être assurée par une liaison par cannelures entre l'alésage 58 et la surface externe 60 de l'enveloppe extérieure 34.

Une fois l'opération de serrage et de fixation de la bride 36 terminée, l'opérateur libère le boîtier 32 par rapport au tripode 26 en ôtant le gabarit de réglage.

Le joint de transmission est alors prêt à fonctionner dans des conditions idéales de débattement de fonctionnement, c'est-à-dire de part et d'autre de sa position axiale médiane représentée à la figure 1.

Dans la variante de réalisation représentée à la figure 2, sur laquelle on a utilisé les mêmes chiffres de référence pour désigner des éléments identiques ou équivalents, l'élément expansible radialement 64 est constitué par un empilement de rondelles élastiques, par exemple du type Belleville, dont la compression axiale par les surfaces de compression 62 et 70 provoque l'accroissement de leurs diamètres intérieur et extérieur et donc la liaison par friction des surfaces 60 et 54.

Les bords intérieur et extérieur de chacune des rondelles de l'empilement peuvent être lisses ou crantés.

Dans le mode de réalisation représenté à la figure 3, le logement qui reçoit l'élément expansible constitué par un empilement de rondelles élastiques, est délimité radialement par la surface cylindrique externe 60 de l'enveloppe extérieure 34 du boîtier et par la surface cylindrique interne d'un alésage borgne 54 qui est ici formé dans la portion tubulaire d'extrémité 52 de l'organe de transmission 16.

Le corps 38 de la bride 36 comporte un prolongement axial en forme de piston annulaire 66 qui pénètre dans l'alésage 54.

La face radiale d'extrémité 70 du piston annulaire 66 et la face radiale 62 du fond 56 de l'alésage 54 assurent, comme dans le cas des modes de réalisation représentés aux figures 1 et 2, une compression axiale progressive de l'élément expansible 64 lors du serrage des boulons 44.

Selon une variante de réalisation, non représentée, il est possible de prévoir que l'extrémité libre de gauche du boîtier 32 soit centrée par son enveloppe 34 dans une portion de guidage de diamètre correspondant de l'organe de transmission 16, et par exemple dans l'alésage interne de la partie tubulaire d'extrémité 52.

**Revendications**

1. Joint de transmission (12) du type comportant un premier élément (26) relié à un premier arbre (14) et monté articulé dans un second élément (32) formant boîtier fixé à un organe de transmission (16), caractérisé en ce que le boîtier (32) comporte une bride radiale de fixation (36) montée coulissante axialement par rapport à l'enveloppe extérieure (34) du boîtier (32) et des moyens (64) d'immobilisation axiale de la bride de fixation (36) par rapport à l'enveloppe extérieure (34) du boîtier (32) lorsque le second élément (32) est en position fixe sur l'organe de transmission (16).

2. Joint de transmission selon la revendication 1, caractérisé en ce que les moyens d'immobilisation axiale comportent des moyens de liaison par friction (64) qui coopèrent avec la surface cylindrique externe de l'enveloppe extérieure (34) du boîtier (32).

3. Joint de transmission selon la revendication 2, caractérisé en ce que les moyens de liaison par friction comportent un élément expansible radialement (64) disposé dans un logement cylindrique annulaire délimité radialement par la surface cylindrique externe (60) de l'enveloppe extérieure (34) et par une portion de surface cylindrique interne (54) formée dans le corps (38) de la bride de fixation (36).

4. Joint de transmission selon la revendication 2, caractérisé en ce que les moyens de liaison par friction comportent un élément expansible radialement (64) disposé dans un logement cylindrique annulaire délimité radialement par la surface cylindrique externe de l'enveloppe extérieure (34) et par une portion de surface cylindrique interne (54) formée dans une partie (52) de l'organe de transmission (16).

5. Joint de transmission selon l'une des revendications 3 ou 4, caractérisé en ce que les moyens de liaison par friction comportent une première (62) et une seconde (70) surfaces radiales de compression formées respectivement sur la bride de fixation (36) et sur l'organe de transmission (16) et qui compriment axialement l'élément expansible dans son logement lors du serrage de la bride de fixation 36 sur l'organe de transmission (16).

6. Joint de transmission selon la revendication 5 prise en combinaison avec la revendication 3, caractérisé en ce que la bride de fixation (36) comporte un alésage axial borgne dont la surface cylindrique (54) constitue ladite portion de surface cylindrique interne du logement et dont la paroi de fond (56, 62) constitue ladite première surface radiale de compression, et en ce que l'organe de transmission (16) comporte un prolongement axial en forme de piston (66) qui pénètre dans l'alésage axial de la bride de fixation (36) et dont la surface radiale d'extrémité (70) constitue ladite seconde surface radiale de compression.

7. Joint de transmission selon la revendication 5 prise en combinaison avec la revendication 4, caractérisé en ce que la bride de fixation (36) comporte un prolongement axial en forme de piston (66) dont la surface radiale d'extrémité (70) constitue ladite première surface radiale de compression et qui pénètre axialement à l'intérieur d'un alésage axial borgne fermé dans l'organe de transmission (16), dont la paroi cylindrique (54) constitue ladite portion de surface cylindrique interne du logement et dont la paroi de fond (56, 62) constitue ladite seconde surface radiale de compression.

8. Joint de transmission selon l'une quelconque des revendications 3 à 7, caractérisé en ce que l'élément expansible (64) est un manchon en matériau élastique.

9. Joint de transmission selon l'une quelconque des revendications 3 à 7, caractérisé en ce que l'élément expansible (64) est constitué par un empilement de rondelles élastiques.

10. Joint de transmission selon l'une quelconque des revendications précédentes, caractérisé en ce qu'il s'agit d'un joint fixe.

11. Joint de transmission selon l'une quelconque des revendications précédentes, caractérisé en ce qu'il s'agit d'un joint coulissant.

12. Partie de ligne de transmission de véhicule automobile du type comportant un arbre de transmission équipé à chacune de ses extrémités d'un joint de transmission, caractérisée en ce que ces deux joints sont réalisés conformément à l'une quelconque des revendications 1 à 11.

13. Procédé pour la mise en place d'un joint de transmission réalisé selon l'une quelconque des revendications 1 à 12, caractérisé en ce qu'il consiste à :
    – a) immobiliser temporairement le boîtier (32) par rapport au premier élément (26) dans une position axiale prédéterminée ;
    – b) laisser se positionner librement le boîtier (32) par rapport à la bride de fixation (36) ;
    – c) immobiliser axialement la bride de fixation (36) par rapport au boîtier (32) ; et
    – d) libérer le boîtier (32) par rapport au premier élément (26).

14. Procédé selon la revendication 13, caractérisé en ce que l'immobilisation axiale temporaire du boîtier (32) par rapport au premier élément (36) est réalisé à l'aide d'un gabarit de réglage.

FIG.1

FIG_2

FIG_3

**Office européen**

**des brevets**

# RAPPORT DE RECHERCHE EUROPEENNE

Numero de la demande

EP   91 40 1124

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|-----------|-------------------------------------------------------------------------------|-------------------------|--------------------------------------|
| X | FR-A-1 268 917  (B.R.D. CO.)<br>* En entier * | 1,4,5,8<br>,11 | F 16 D   1/08<br>F 16 D   3/00<br>F 16 D   3/205 |
| Y | | 2,3,6,7<br>,9,12 | |
| Y | US-A-3 646 777  (ANDERSON)<br>* En entier * | 2,3,6,7<br>,9 | |
| A | | 4,5 | |
| Y | DE-A-1 505 262  (AUTO-UNION)<br>* En entier * | 12 | |
| A | | 11 | |
| X | DE-A-3 343 794  (CHIVARI)<br>* Pages 12-15; figures 2-4 * | 1,8,11 | |
| Y | | 2-4,7,9<br>,10,12 | |
| Y | FR-A-  816 502  (THIRY)<br>* En entier * | 2-4,10,<br>12 | |
| A | | 8 | **DOMAINES TECHNIQUES RECHERCHES (Int. Cl.5)** |
| Y | US-A-3 905 209  (CONRAD)<br>* Colonnes 2-4; figures 1-4 * | 7,9 | F 16 D   1/00<br>F 16 D   3/00 |
| A | | 2,4,5 | |
| X | GB-A-2 075 635  (LÖHR & BROMKAMP)<br>* En entier * | 1,8,11,<br>12 | |
| Y | -/- | 2,4,5,7 | |

Le présent rapport a été établi pour toutes les revendications

| Lieu de la recherche | Date d'achèvement de la recherche | Examinateur |
|----------------------|-----------------------------------|-------------|
| LA HAYE | 15-07-1991 | BALDWIN D.R. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P0402)

Office européen
des brevets

**RAPPORT DE RECHERCHE EUROPEENNE**

Numero de la demande

EP  91 40 1124

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A- 864 465  (SCHAEFFLER)<br>* En entier *<br>--- | 2,4,5,7 | |
| A | GB-A- 864 465<br>--- | 8 | |
| A | DE-A-3 504 670  (REICH)<br>* Pages 8-10; figures 3,5 *<br>--- | 1,8,10-12 | |
| A | FR-A-1 180 477  (SOCIETE D'ETUDES)<br>* En entier *<br>----- | 2,4,5,7,8 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 15-07-1991 | BALDWIN D.R. |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
........................................................................................
& : membre de la même famille, document correspondant

EPO FORM 1503 03.82 (P0402)